# EUROPÄISCHE PATENTSCHRIFT

(11) **EP 3 085 235 B1**
(45) Veröffentlichungstag und Bekanntmachung des Hinweises auf die Patenterteilung: **01.05.2019**
(21) Anmeldenummer: 16163564.4
(22) Anmeldetag: 01.04.2016
(51) Int. Cl.: A21C 3/06

(54) **VERFAHREN ZUR HERSTELLUNG VON GEWICKELTEN TEIGPRODUKTEN AUS TEIGSTÜCKEN**
METHOD FOR THE PREPARATION OF COILED DOUGH PIECES FROM PIECES OF DOUGH
PROCÉDÉ DE FABRICATION DE PRODUITS EN PÂTE ENROULÉE À PARTIR DE PÂTE

(30) Priorität: 22.04.2015 DE 102015106138
(43) Veröffentlichungstag der Anmeldung: 26.10.2016
(73) Patentinhaber: Rondo Burgdorf AG, 3400 Burgdorf (CH)
(72) Erfinder: Zwahlen, Andreas, 3415 Hasle bei Burgdorf (CH); Weissbach, Alexander, 4542 Luterbach (CH)
(74) Vertreter: Keller & Partner Patentanwälte AG

(56) Entgegenhaltungen:
- EP-A1- 0 204 490
- EP-A1- 0 360 498
- EP-A1- 2 762 005
- GB-A- 491 582

## Beschreibung

### Technisches Gebiet

Die Erfindung betrifft ein Verfahren zur Herstellung von gewickelten Teigprodukten aus Teigstücken, insbesondere zur Herstellung von Croissants aus Teigstücken.

### Stand der Technik

Aus dem Stand der Technik sind unterschiedliche Vorrichtungen und Verfahren zum Aufwickeln von Teigstücken bekannt. Insbesondere können gewickelte Teigprodukte, wie beispielsweise Croissants, durch Aufrollen eines flachen Teigstückes zwischen zwei gegenläufigen Bändern hergestellt werden.

Beispielsweise offenbart die EP 0 204 490 A1 eine Vorrichtung mit einem Wickelmechanismus, der über zwei übereinander angeordneten Förderbänder verfügt und die eine gegenläufige Bandlaufrichtung aufweisen. Das untere Band hat eine höhere Geschwindigkeit als das obere Band. Zunächst wird ein Teigstück durch einen Walzenspalt zu einem ersten Ende des unteren Förderbandes geführt, wo die Vorderkante des Teigstücks nach oben und dort durch Kontakt mit dem oberen Förderband weiter nach hinten umgeschlagen wird. Durch eine Bewegung des vorderen Endes nach unten und damit mit einer Vergrösserung des Abstandes zwischen den beiden Förderbändern im Bereich des ersten Endes wird das teilgewickelte Teigstück zwischen beide Förderbänder gezogen, wobei das Teigstück zwischen den Förderbändern gleichzeitig gefördert und fertiggewickelt wird. Die Vorrichtung kann eine Kontrolleinheit aufweisen, welche die Bewegung des ersten Endes nach einer vorbestimmten Zeit, nachdem ein Teigstück mit diesem in Kontakt kommt, auslöst. Die Geschwindigkeit der Förderbänder kann frei eingestellt werden.

Die EP 2 762 005 A1 beschreibt eine Fertigungsstrasse für gerollte Teigprodukte, insbesondere für Croissants. Die Fertigungsstrasse umfasst ein Fördermittel für ein Teigprodukt sowie eine Wickelvorrichtung mit einem Umlenkelement, welches von einer Eingriffsposition, in welcher das Umlenkelement über dem Fördermittel hervorsteht, in eine Loslöseposition bewegbar ist. Über dem Umlenkelement ist ein Wickelelement angeordnet, welches mit dem Umlenkelement zusammenwirkt, um das Teigprodukt zu wickeln. Das Umlenkelement wird über eine Antriebsvorrichtung periodisch von der Eingriffsposition in die Loslöseposition bewegt. Sowohl der Oszillationswinkel als auch die Position des Wickelelements lassen sich über entsprechende Einstellmittel verändern. Diese Offenlegung offenbart alle die Merkmale im Oberbegriff des Anspruchs 1.

Die EP 0 327 856 A1 bezieht sich auf eine Wickelvorrichtung zum Aufwickeln von Croissants. Die Wickelvorrichtung verfügt über zwei übereinander angeordnete Förderbänder, wobei bei einem unteren Förderband die vordere Kante in einer oszillierenden Bewegung auf- und ab bewegt wird. Die Oszillationsbewegungen werden mit den restlichen Bewegungen der Vorrichtung koordiniert. Zwischen einer Walze, des oberen Förderbandes sowie der Vorderkante des unteren Förderbandes bildet sich ein Sitz, in welchem ein Teigstück gerollt werden kann. Ein Teigdreieck wird an der Vorderkante des unteren Förderbandes aufgerollt, wobei durch die nach unten gerichtete Oszillationsbewegung der vorderen Kante das fertig gerollte Teigstück zur Förderung über das untere Transportband freigegeben wird.

Die GB 491 582 offenbart ein Verfahren zum Wickeln von Teigprodukten mittels einer Vorrichtung mit einem Zuführband und zwei Wickelwalzen, wobei die Wickelwalzen mit einer höheren Geschwindigkeit angetrieben werden können, als die Geschwindigkeit des Zuführbandes. Zum Ausstossen einer Teigrolle werden die Wickelwalzen kurzzeitig auf eine niedrigere Geschwindigkeit abgebremst.

### Darstellung der Erfindung

Aufgabe der Erfindung ist es, eine dem eingangs genannten technischen Gebiet zugehörendes Verfahren zu schaffen, welches gegenüber den im Stand der Technik bekannten Verfahren ein effizienteres Aufwickeln von Teigstücken ermöglicht.

Die Lösung der Aufgabe ist durch die Merkmale des Anspruchs 1 definiert. Gemäss der vorliegenden Erfindung wird in einem ersten Schritt des Verfahrens mindestens ein Teigstück durch ein Zuführband mit einer ersten vorbestimmten Geschwindigkeit in einer Förderrichtung zu einem ersten Ende eines ersten Wickelbandes hin gefördert. Nach einer ersten vorbestimmten Zeit wird das erste Ende von einer Grundposition um eine erste vorbestimmte Distanz zu einer Einwickelposition angehoben, so dass eine Kante des mindestens einen Teigstückes beim Erreichen des ersten Endes von diesem nach oben umgeschlagen wird. Anschliessend wird die umgeschlagene Kante durch ein zweites Wickelband erfasst, wobei das zweite Wickelband oberhalb des ersten Wickelbandes angeordnet ist, so dass zwischen einer oberen Bandstrecke des ersten Wickelbandes und einer unteren Bandstrecke des zweiten Wickelbandes ein Wickelraum gebildet wird. Die untere Bandstrecke des zweiten Wickelbandes wird entgegen der Förderrichtung mit einer dritten vorbestimmten Geschwindigkeit angetrieben, welche höher ist als die erste vorbestimmte Geschwindigkeit. Nach einer dritten vorbestimmten Zeit wird das erste Ende in die Grundposition bewegt und das zweite Wickelband wird nach einer vierten vorbestimmten Zeit mit einer zweiten Geschwindigkeit, welche tiefer ist als die erste vorbestimmte Geschwindigkeit und die dritte vorbestimmte Geschwindigkeit, angetrieben, so dass das eingeschlagene Teigprodukt in den Wickelraum zu einem zweiten Ende des ersten Wickelbandes hin gefördert und dabei gewickelt wird.

Durch die Erhöhung der Geschwindigkeit des zweiten Wickelbandes beim Einwickeln kann eine besonders enge erste Wicklung erzielt werden.

Die Teigstücke sind vorzugsweise vorgängig kalibrierte sowie ausgestanzte Teigstücke, welche eine bestimmte Form aufweisen. Sollen beispielsweise Croissants hergestellt werden, so weisen die Teigstücke vorzugsweise die Form eines Trapezes auf. Grundsätzlich können unterschiedlich geformte Teigstücke mit der erfindungsgemässen Vorrichtung sowie dem erfindungsgemässen Verfahren zu gewickelten Teigprodukten verarbeitet werden, wie beispielsweise viereckige, dreieckige, trapezförmige, runde oder beliebig polygonale Teigstücke. Die Teigprodukte können dabei sowohl ungefüllt oder mit einer Füllung versehen sein, wie beispielsweise einer Nuss-, Mandel- oder Schokoladenfüllung. Bei der Herstellung von gefüllten Teigprodukten wird das Füllmaterial vorgängig auf die Teigstücke aufgetragen, beispielsweise mittels einer Gussvorrichtung.

Vorzugsweise wird gleichzeitig nur eine Linie des Teigstückes mittels des erfindungsgemässen Verfahrens oder der Vorrichtung gewickelt. In der vorliegenden Anmeldung wird unter "Linie" die Anordnung von Teigstücken beziehungsweise von Teigprodukten verstanden, welche in rechtwinkliger Richtung relativ zur Förderrichtung nebeneinander liegen. In jeder Linie sind vorzugsweise mehrere Teigstücke beziehungsweise Teigprodukte nebeneinander angeordnet. Die nebeneinander angeordneten Teigstücke beziehungsweise Teigprodukte mehrerer Linien bilden in Förderrichtung Reihen an Teigstücken beziehungsweise an Teigprodukten. Vorzugsweise werden mit der erfindungsgemässen Vorrichtung eine bis zehn Reihen an Teigstücken pro Linie gleichzeitig gewickelt.

Das erste Wickelband wird durch einen ersten Antrieb derart angetrieben, dass sich dessen obere Bandstrecke mit der ersten vorbestimmten Geschwindigkeit in die Förderrichtung bewegt. Vorzugsweise wird die obere Bandstrecke des ersten Wickelbandes während des gesamten Verfahrens konstant mit der ersten vorbestimmten Geschwindigkeit in Förderrichtung durch den ersten Antrieb angetrieben.

Vorzugsweise wird nach einer fünften vorbestimmten Zeit das erste Ende während einer sechsten vorbestimmten Zeit um eine zweite vorbestimmte Distanz angehoben. Die sechste vorbestimmte Zeit ist dabei kürzer als diejenige Zeit, welche nötig ist, um das Teigprodukt durch den Wickelraum zu fördern.

Durch das erneute Anheben des ersten Endes während des Fertigwickelns des Teigprodukts kann ein vorbestimmter Druck auf dasselbe ausgeübt werden, um Form und Wicklung des Teigprodukts zu beeinflussen.

Vorzugsweise entspricht die zweite vorbestimmte Distanz einem vorbestimmten prozentualen Wert der ersten vorbestimmten Distanz.

Vorzugsweise wird nach einer siebten vorbestimmten Zeit das zweite Wickelband während einer achten vorbestimmten Zeit auf eine vierte vorbestimmte Geschwindigkeit, welche höher ist als die zweite vorbestimmte Geschwindigkeit, angetrieben. Die siebte vorbestimmte Zeit ist dabei kleiner als die zum Fördern des Teigprodukts durch den Wickelraum nötige Zeit.

Durch die Erhöhung der Geschwindigkeit des zweiten Wickelbandes während sich das Teigprodukt im Wickelraum befindet, kann die Form und Wicklung der Teigprodukte weiter beeinflusst werden. Insbesondere erhöht sich dadurch die Verweilzeit der Teigprodukte im Wickelraum, da sich die Fördergeschwindigkeit derselben im Wickelraum verlangsamt oder umgekehrt. Dies ist auf den Geschwindigkeitsunterschied zwischen dem ersten Wickelband und dem zweiten Wickelband zurückzuführen. Ist die vierte vorbestimmte Geschwindigkeit gleich hoch wie die erste vorbestimmte Geschwindigkeit resultiert kein Geschwindigkeitsunterschied und das Teigprodukt wird im Wickelraum im Wesentlichen am gleichen Ort fertiggewickelt. Ist die vierte vorbestimmte Geschwindigkeit höher als die erste vorbestimmte Geschwindigkeit, so wird das Teigprodukt während der achten vorbestimmten Zeit entgegen der Förderrichtung zum ersten Ende des ersten Wickelbandes hin gefördert.

Bevorzugt sind die fünfte, sechste, siebte und achte vorbestimmte Zeit derart gewählt, dass das Anheben des ersten Endes sowie die Beschleunigung des zweiten Wickelbandes zumindest teilweise gleichzeitig stattfinden. Dadurch können bei den Teigprodukten zusätzliche Wicklungen erzeugt werden.

Insbesondere bevorzugt sind dabei die fünfte vorbestimmte Zeit und die siebte vorbestimmte Zeit und/oder die sechste vorbestimmte Zeit sowie die achte vorbestimmte Zeit gleich. Das heisst, dass die Beschleunigung des zweiten Wickelbandes sowie das Anheben des ersten Endes um die zweite vorbestimmte Distanz gleichzeitig stattfinden. Ferner kann das Antreiben des zweiten Wickelbandes mit der vierten vorbestimmten Geschwindigkeit gleich lange dauern wie das Anheben des ersten Endes um die zweite vorbestimmte Distanz. Insbesondere bevorzugt finden die beiden Ereignisse gleichzeitig statt und dauern gleich lange an, d.h. die fünfte vorbestimmte Zeit ist gleich wie die siebte vorbestimmte Zeit und die sechste vorbestimmte Zeit ist gleich wie die achte vorbestimmte Zeit.

Dadurch wird es möglich, bei nur gering höherer Verweilzeit des Teigprodukts im Wickelraum zusätzliche Wicklungen zu erzeugen.

Die vorliegende Anmeldung betrifft weiter die Verwendung des oben beschriebenen Verfahrens zur Herstellung von Croissants, insbesondere von gefüllten Croissants, oder von Baguettes aus Teigstücken.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: den ersten Schritt des erfindungsgemässen Verfahrens anhand einer schematische Seitenansicht einer Vorrichtung, welche zur Durchführung des erfindungsgemässen Verfahrens geeignet ist;
- Figs. 2, 3: den zweiten Schritt des erfindungsgemässen Verfahrens
- Fig. 4: der dritte Schritt des erfindungsgemässen Verfahrens;
- Fig. 5: der vierte Schritt des erfindungsgemässen Verfahrens, bei dem das erste Ende auf die Grundposition zurückbewegt wird;
- Fig. 6: eine bevorzugte Ausführungsform, bei welcher das erste Ende um eine zweite vorbestimmte Distanz zum zweiten Wickelband hin bewegt und dieses mit einer vierten vorbestimmten Geschwindigkeit angetrieben wird;
- Fig. 7: ein Endschritt des erfindungsgemässen Verfahrens, bei welchem das fertig gewickelte Teigprodukt auf ein Abführband transferiert wird, wobei gleichzeitig ein nächstes Teigstück zum ersten Ende hin gefördert wird.

Grundsätzlich sind in den Figuren gleiche Teile mit gleichen Bezugszeichen versehen.

### Wege zur Ausführung der Erfindung

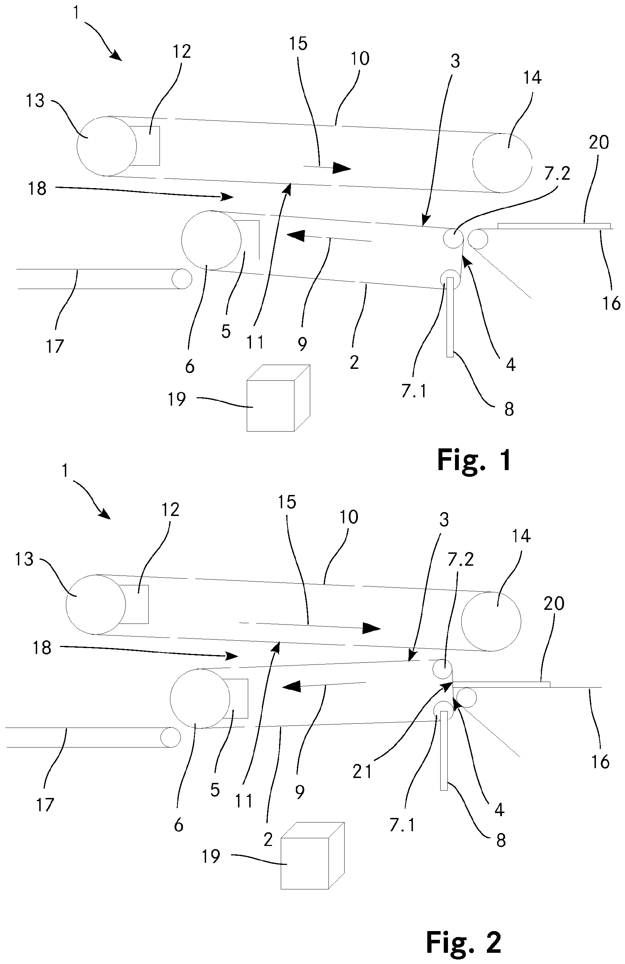

Die Fig. 1 zeigt einen ersten Schritt des erfindungsgemässen Verfahrens anhand einer schematische Seitenansicht einer Vorrichtung 1, welche zur Durchführung des erfindungsgemässen Verfahrens geeignet ist. Die Vorrichtung 1 ist zwischen einem Zuführband 16 und einem Abführband 17, welche beide nur teilweise dargestellt sind, angeordnet. Die Vorrichtung 1 verfügt über ein erstes Wickelband 2. Das erste Wickelband 2 läuft über drei Umlenkrollen 6, 7.1, 7.2, wobei zwei erste Umlenkrollen 7.1, 7.2 im Wesentlichen vertikal übereinander angeordnet sind. Die beiden ersten Umlenkrollen sind dabei an einem ersten Ende 4 des ersten Wickelbandes 2 angeordnet. Zwischen den beiden zweiten Umlenkrollen 7.1, 7.2 bildet das zweite Wickelband einen im Wesentlichen ebenen Endbandbereich. Die eine zweite Umlenkrolle 6 wirkt mit einem ersten Antrieb 5 zusammen. Über diesen ersten Antrieb 5 lässt sich das erste Wickelband 2 derart antreiben, dass eine obere Bandstrecke 3 mit einer ersten vorbestimmten Geschwindigkeit in einer Förderrichtung eines Teigstücks 20 bewegt wird. Die erste vorbestimmte Geschwindigkeit sowie die Förderrichtung sind durch einen ersten Pfeil 9 angedeutet. Ein dritter Antrieb 8 wirkt mit dem ersten Ende 4 des ersten Wickelbandes 2 derart zusammen, dass dieser im Wesentlichen in vertikaler Richtung bewegt werden kann. In der Darstellung der Fig. 1 befindet sich das erste Ende 4 in einer Grundposition. In dieser Grundposition befindet sich die obere Bandstrecke 3 am ersten Ende 4 im Wesentlichen auf gleicher Höhe mit dem Zuführband 16.

Oberhalb des ersten Wickelbandes 2 ist ein zweites Wickelband 10 angeordnet. Das zweite Wickelband 10 wird über eine dritte Umlenkrolle 13 sowie über eine vierte Umlenkrolle 14 geführt. Über einen zweiten Antrieb 12, welcher in der gezeigten Ausführungsform auf die dritte Umlenkrolle 13 einwirkt, kann das zweite Wickelband 10 derart angetrieben werden, dass eine untere Bandstrecke 11, welche der oberen Bandstrecke 3 des ersten Wickelbandes 2 gegenüberliegt, entgegen der Förderrichtung 9 mit einer zweiten vorbestimmten Geschwindigkeit, welche kleiner ist als die erste vorbestimmte Geschwindigkeit, angetrieben werden kann. Die Laufrichtung sowie die zweite vorbestimmte Geschwindigkeit der unteren Bandstrecke 11 sind mit einem zweiten Pfeil 15 angedeutet.

Zwischen der oberen Bandstrecke 3 des ersten Wickelbandes 2 sowie der unteren Bandstrecke 11 des oberen Wickelbandes 10 wird ein Wickelbereich 18 der Vorrichtung 1 gebildet.

Die Vorrichtung 1 verfügt im Weiteren über eine Steuerungseinheit 19, welche mit dem ersten Antrieb 5, dem zweiten Antrieb 12 sowie dem dritten Antrieb 8 verbunden ist, um diese zu steuern. Die Steuerungseinheit verfügt über Mittel, mit denen sich die vorbestimmten Parameter der Vorrichtung 1, wie zum Beispiel die erste vorbestimmte Geschwindigkeit und die zweite vorbestimmte Geschwindigkeit, durch einen Benutzer einstellen beziehungsweise verändern lassen.

Das Teigstück 20 wird hierbei zum ersten Ende 4 des ersten Wickelbandes 2 hin gefördert.

Die Fig. 2 stellt im Wesentlichen den zweiten Schritt des erfindungsgemässen Verfahrens dar. Das erste Ende 4 ist um eine erste vorbestimmte Distanz zum zweiten Wickelband 10 hin in eine Aufwickelposition bewegt. Die Bewegung des ersten Endes 4 erfolgt über den dritten Antrieb 8, welcher beispielhaft als Kolben angedeutet ist. In der Aufwickelposition steht die obere Bandstrecke 3 über der Ebene des Zuführbandes 16, so dass ein zum ersten Ende 4 hin gefördertes Teigstück 20 mit einer ersten Kante 21 auf den Endbandbereich stösst. Durch die fortgesetzte Förderung des Teigstückes 20 durch das Zuführband 16 sowie durch die im Wesentlichen vertikal nach oben gerichtete Laufrichtung des ersten Wickelbandes 2 am ersten Ende 4 wird die erste Kante 21 des Teigstücks 20 nach oben umgeschlagen.

Der zweite Antrieb 12 beschleunigt das zweite Wickelband 10 derart, dass die untere Bandstrecke 11 mit einer dritten Geschwindigkeit, welche höher ist als die erste Geschwindigkeit, entgegen der Förderrichtung 9 angetrieben wird. Die höhere Laufgeschwindigkeit der unteren Bandstrecke 11 ist durch den verlängerten zweiten Pfeil 15 symbolisch dargestellt.

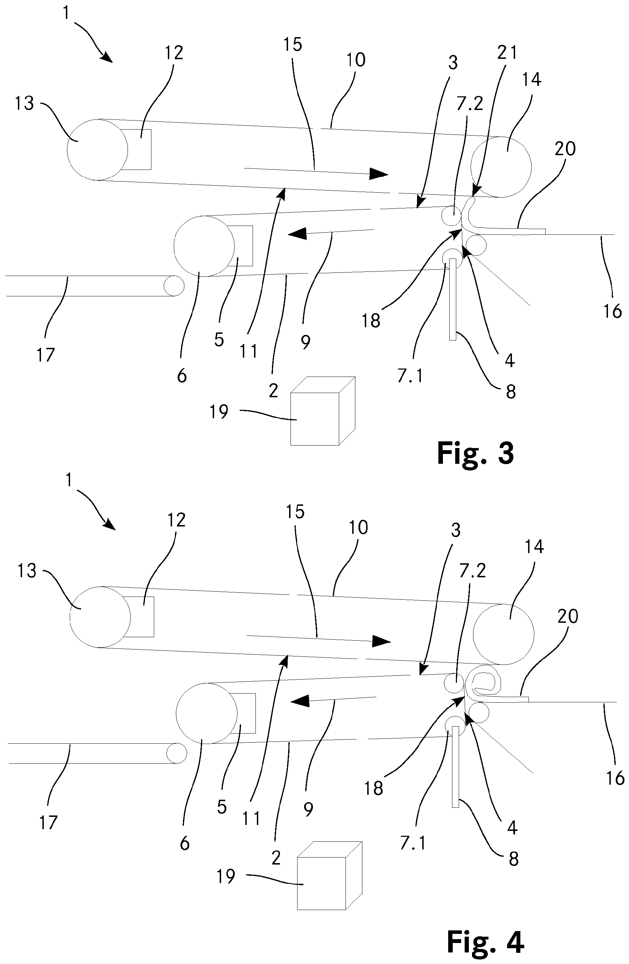

In der Fig. 3 ist der nächste Schritt des erfindungsgemässen Verfahrens dargestellt. Die erste Kante 21 des Teigstücks 20 wird soweit umgeschlagen, bis diese durch die untere Bandstrecke 11 des zweiten Wickelbandes 10 erfasst wird. Durch die der Förderrichtung 9 entgegengesetzte Laufrichtung der unteren Bandstrecke 11 wird die erste Kante 21 des Teigstücks 20 nach hinten unten umgeschlagen, bis ca. eine ganze Wicklung erreicht ist, wie dies in Fig. 4 veranschaulicht wird.

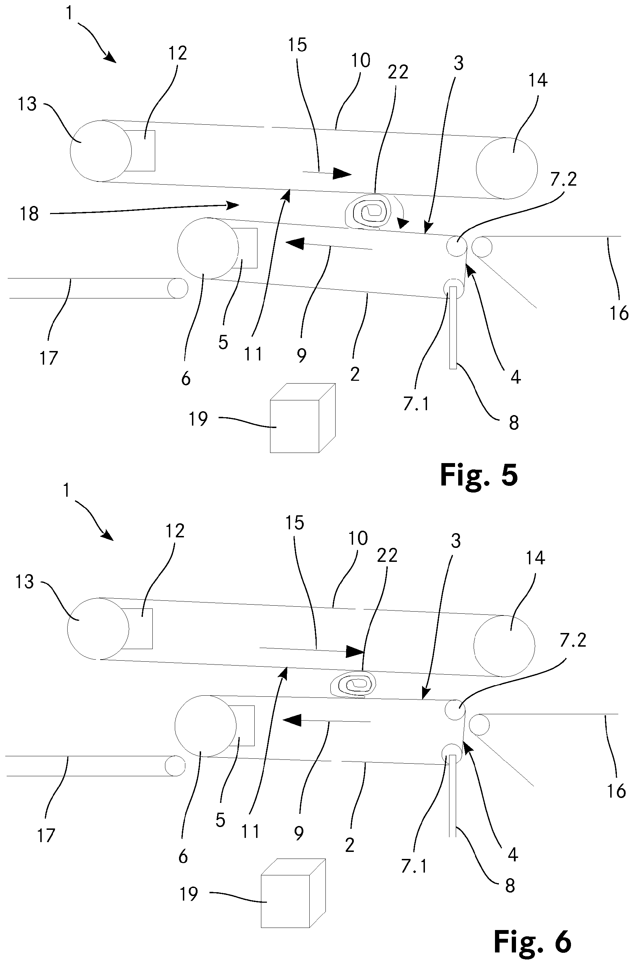

Der nächste Schritt des erfindungsgemässen Verfahrens ist in Fig. 5 gezeigt. Nach einer dritten vorbestimmten Zeit wird das erste Ende 4 wieder in die Grundposition gemäss Fig. 1 zurückbewegt und die untere Bandstrecke 11 des zweiten Wickelbands 10 anschliessend nach einer vierten vorbestimmten Zeit wieder auf die zweite vorbestimmte Geschwindigkeit abgebremst. Dabei wird das eingewickelte Teigstück 20 zwischen der oberen Bandstrecke 3 und der unteren Bandstrecke 11 in den Wickelraum 18 gezogen. Da die obere Bandstrecke 3 relativ zur unteren Bandstrecke 11 mit einer höheren Laufgeschwindigkeit angetrieben wird, resultiert eine Bewegung des Teigstücks 20 in die Förderrichtung 9, wobei das Teigstück 20 aufgrund der unterschiedlichen Laufrichtung der oberen Bandstrecke 3 und der unteren Bandstrecke 11 weiterhin gewickelt wird, wie dies durch den gebogenen Pfeil symbolisiert ist.

Die Fig. 6 zeigt eine besonders bevorzugte Ausführungsform des erfindungsgemässen Verfahrens. Nach einer fünften vorbestimmten Zeit wird das erste Ende 4 für eine sechste vorbestimmte Zeit um eine zweite vorbestimmte Distanz zum zweiten Wickelband 10 hin bewegt. Dadurch wird während des Wickelns des aus dem Teigstück 20 entstehenden Teigprodukts 22 Druck ausgeübt. Nach einer siebten vorbestimmten Zeit wird zudem während einer achten vorbestimmten Zeit das zweite Wickelband 10 mit einer vierten vorbestimmten Geschwindigkeit, welche höher als die erste vorbestimmte Geschwindigkeit ist, angetrieben. Vorzugsweise sind die fünfte, sechste, siebte und achte vorbestimmte Zeit derart gewählt, dass das Bewegen des vorderen Endes 4 sowie das Antreiben des zweiten Wickelbandes 10 mit der vierten vorbestimmten Geschwindigkeit zumindest teilweise gleichzeitig stattfindet.

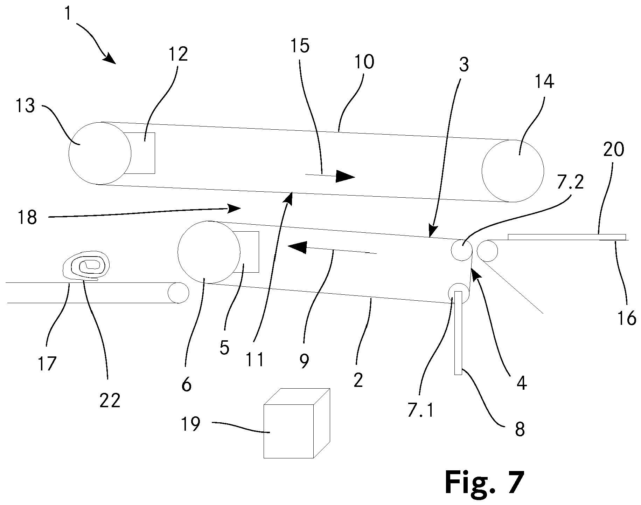

Wie in Fig. 7 dargestellt, wird anschliessend das erste Ende 4 wieder in die Grundposition bewegt und das zweite Wickelband 10 wird wieder mit der zweiten vorbestimmten Geschwindigkeit angetrieben. Dabei wird das Teigprodukt 22 im Wickelraum 18 fertiggewickelt und auf das Abführband 17 transferiert. Derweil wird durch das Zuführband 16 ein weiteres Teigstück 20 zum ersten Ende 4 hin gefördert.

## Patentansprüche

1. Verfahren zum Wickeln von Teigprodukten (22) aus Teigstücken (20), umfassend die Schritte:
a) Fördern mindestens eines Teigstückes (20) durch ein Zuführband (16) mit einer ersten Geschwindigkeit in einer Förderrichtung zu einem ersten Ende (4) eines ersten Wickelbandes (2) hin, wobei ein erster Antrieb eine obere Bandstrecke des ersten Wickelbandes mit der ersten vorbestimmten Geschwindigkeit in Förderrichtung antreibt;
b) nach einer ersten vorbestimmten Zeit anheben des ersten Endes (4) von einer Grundposition um eine erste vorbestimmte Distanz zu einer Einwickelposition, so dass eine erste Kante (21) des mindestens einen Teigstückes (20) beim Erreichen des ersten Endes (4) von diesem nach oben umgeschlagen wird;
c) erfassen der umgeschlagenen ersten Kante (21) durch eine untere Bandstrecke (11) eines zweiten Wickelbandes (10), welches oberhalb des ersten Wickelbandes (2) angeordnet ist, so dass zwischen einer oberen Bandstrecke (3) des ersten Wickelbandes (2) und der unteren Bandstrecke (11) des zweiten Wickelbandes (10) ein Wickelraum (18) gebildet wird, wobei das zweite Wickelband (10) durch einen zweiten Antrieb (12) derart angetrieben wird, dass die untere Bandstrecke (11) mit einer zweiten Geschwindigkeit, welche geringer ist als die erste Geschwindigkeit, entgegen der Förderrichtung bewegt wird;
**dadurch gekennzeichnet, dass** das Verfahren die folgenden Schritte umfasst:
d) nach einer zweiten vorbestimmten Zeit antreiben der unteren Bandstrecke des zweiten Wickelbandes mit einer dritten vorbestimmten Geschwindigkeit, welche höher ist als die erste vorbestimmte Geschwindigkeit und die zweite vorbestimmte Geschwindigkeit, entgegen der Förderrichtung;
e) nach einer dritten vorbestimmten Zeit bewegen des ersten Endes (4) in die Grundposition und nach einer vierten vorbestimmten Zeit antreiben der unteren Bandstrecke (11) des zweiten Wickelbandes (10) mit der zweiten vorbestimmten Geschwindigkeit, welche tiefer ist als die erste vorbestimmte Geschwindigkeit, entgegen der Förderrichtung, so dass das eingeschlagene Teigstück (20) in den Wickelraum (18) und zu einem zweiten Ende des ersten Wickelbandes (2) hin gefördert und dabei zu einem Teigprodukt (22) gewickelt wird.

2. Verfahren gemäss Anspruch 1, **dadurch gekennzeichnet, dass** nach einer fünften vorbestimmten Zeit, welche kleiner ist als die zum Fördern des Teigprodukts (22) durch den Wickelraum (18) nötige Zeit, das erste Ende (4) während einer sechsten vorbestimmten Zeit um eine zweite vorbestimmte Distanz angehoben wird.

3. Verfahren gemäss einem der Ansprüche 1 oder 2, **dadurch gekennzeichnet, dass** nach einer siebten vorbestimmten Zeit, welche kleiner ist als die zum Fördern des Teigprodukts (22) durch den Wickelraum (18) nötige Zeit, die untere Bandstrecke (11) des zweiten Wickelbandes (10) während einer achten vorbestimmten Zeit mit einer vierten Geschwindigkeit, welche höher ist als die zweite vorbestimmte Geschwindigkeit, entgegen der Förderrichtung angetrieben wird.

4. Verfahren gemäss den Ansprüchen 2 und 3, **dadurch gekennzeichnet, dass** die fünfte vorbestimmte Zeit sowie die siebte vorbestimmte Zeit und/oder die sechste vorbestimmte Zeit sowie die achte vorbestimmte Zeit gleich sind.

5. Verfahren gemäss Anspruch 1, **dadurch gekennzeichnet, dass** die zweite vorbestimmte Distanz einem vorbestimmten prozentualen Wert der ersten vorbestimmten Distanz entspricht.

6. Verwendung eines Verfahrens gemäss einem der Ansprüche 1 bis 5 zum Herstellen von Croissants, insbesondere von gefüllten Croissants, aus Teigstücken.

## Claims

1. Method for coiling dough products (22) from dough pieces (20), comprising the steps of:
a) conveying at least one dough piece (20) by an infeed belt (16) at a first speed in a conveying direction towards a first end (4) of a first coiling belt (2), wherein a first drive drives an upper belt section of the first coiling belt in the conveying direction at the first predetermined speed;
b) after a first predetermined time, lifting the first end (4) from a basic position by a first predetermined distance to a coiling intake position such that a first edge (21) of the at least one dough piece (20) when reaching the first end (4) is folded upwards by the latter;
c) acquiring the folded first edge (21) by a lower belt section (11) of a second coiling belt (10) which is disposed above the first coiling belt (2) such that a coiling space (18) is formed between an upper belt section (3) of the first coiling belt (2) and the lower belt section (11) of the second coiling belt (10), wherein the second coiling belt (10) by a second drive (12) is driven in such a manner that the lower belt section (11) is moved counter to the conveying direction at a second speed which is lower than the first speed;
**characterized in that** the method comprises the following steps:
d) after a second predetermined time, driving the lower belt section of the second coiling belt counter to the conveying direction at a third predetermined speed which is higher than the first predetermined speed and the second predetermined speed;
e) after a third predetermined time, moving the first end (4) to the basic position and, after a fourth predetermined time, driving the lower belt section (11) of the second coiling belt (10) counter to the conveying direction at the second predetermined speed which is lower than the first predetermined speed, such that the tucked-in dough piece (20) is conveyed into the coiling space (18) and towards a second end of the first coiling belt (2) and herein is coiled so as to form a dough product (22).

2. Method according to Claim 1, **characterized in that**, after a fifth predetermined time which is less than the time required for conveying the dough product (22) through the coiling space (18), the first end (4) during a sixth predetermined time is lifted by a second predetermined distance.

3. Method according to either of Claims 1 and 2, **characterized in that**, after a seventh predetermined time which is less than the time required for conveying the dough product (22) through the coiling space (18), the lower belt section (11) of the second coiling belt (10) during an eighth predetermined time is driven counter to the conveying direction at a fourth speed which is higher than the second predetermined speed.

4. Method according to Claims 2 and 3, **characterized in that** the fifth predetermined time as well as the seventh predetermined time and/or the sixth predetermined time as well as the eighth predetermined time are identical.

5. Method according to Claim 1, **characterized in that** the second predetermined distance corresponds to a predetermined percentage value of the first predetermined distance.

6. Use of a method according to one of Claims 1 to 5 for producing croissants, in particular filled croissants, from dough pieces.

## Revendications

1. Procédé d'enroulement de produits en pâte (22) à partir de morceaux de pâte (20), comprenant les étapes suivantes :
a) transport d'au moins un morceau de pâte (20) par une bande d'acheminement (16) à une première vitesse dans un sens de transport vers une première extrémité (4) d'une première bande d'enroulement (2), une première commande entraînant un segment de bande supérieur de la première bande d'enroulement à la première vitesse prédéfinie dans le sens de transport,
b) après une première durée prédéfinie, soulèvement de la première extrémité (4) depuis une position de base à raison d'une première distance prédéterminée vers une position d'enroulement de sorte qu'un premier bord (21) de l'au moins un morceau de pâte (20), à l'atteinte de la première extrémité (4) soit replié par celle-ci vers le haut ;
c) saisie du premier bord replié (21) par un segment de bande inférieur (11) d'une seconde bande d'enroulement (10) qui est disposée au-dessus de la première bande d'enroulement (2) de sorte que, entre un segment de bande supérieur (3) de la première bande d'enroulement (2) et le segment de bande inférieur (11) de la seconde bande d'enroulement (10), un espace d'enroulement (18) soit constitué, la seconde bande d'enroulement (10) étant entraînée par une seconde commande (12) de manière à ce que le segment de bande inférieur (11) se déplace à une deuxième vitesse qui est inférieure à la première vitesse dans le sens inverse au sens de transport ;
**caractérisé en ce que** ce procédé comprend les étapes suivantes :
d) après une deuxième durée prédéfinie, entraînement du segment de bande inférieur de la seconde bande d'enroulement à une troisième vitesse prédéfinie qui est supérieure à la première vitesse prédéfinie et à la deuxième vitesse prédéfinie dans le sens inverse au sens de transport ;
e) après une troisième durée prédéfinie, déplacement de la première extrémité (4) vers la position de base et, après une quatrième durée prédéfinie, entraînement du segment de bande inférieur (11) de la seconde bande d'enroulement (10) à la deuxième vitesse prédéfinie qui est plus basse que la première vitesse prédéfinie dans le sens inverse au sens de transport de manière à ce que le morceau de pâte replié (20) soit transporté dans l'espace d'enroulement (18) et vers une deuxième extrémité de la première bande d'enroulement (2) et y soit enroulé en un produit en pâte (22).

2. Procédé selon la revendication 1, **caractérisé en ce que**, après une cinquième durée prédéfinie qui est inférieure à la durée nécessaire pour transporter le produit en pâte (22) à travers l'espace d'enroulement (18), la première extrémité (4) est soulevée pendant une sixième durée prédéfinie à raison d'une seconde distance prédéfinie.

3. Procédé selon une des revendications 1 ou 2, **caractérisé en ce que**, après une septième durée prédéfinie qui est inférieure à la durée nécessaire pour transporter le produit en pâte (22) à travers l'espace d'enroulement (18), le segment de bande inférieur (11) de la seconde bande d'enroulement (10) est entraîné pendant une huitième durée prédéfinie à une quatrième vitesse qui est supérieure à la deuxième vitesse prédéfinie dans le sens inverse au sens de transport.

4. Procédé selon les revendications 2 et 3, **caractérisé en ce que** la cinquième durée prédéfinie et la septième durée prédéfinie et/ou la sixième durée prédéfinie et la huitième durée prédéfinie sont égales.

5. Procédé selon la revendication 1, **caractérisé en ce que** la seconde distance prédéfinie correspond à une valeur en pourcentage prédéfinie de la première distance prédéfinie.

6. Utilisation d'un procédé selon une des revendications 1 à 5 pour la fabrication de croissants, en particulier de croissants fourrés, à partir de morceaux de pâte.
